Europäisches Patentamt

European Patent Office

Office européen des brevets

(19)

(11) Numéro de publication: **0 077 986**
**A1**

(12) **DEMANDE DE BREVET EUROPEEN**

(21) Numéro de dépôt: **82109541.1**

(22) Date de dépôt: **15.10.82**

(51) Int. Cl.³: **G 03 B 15/02**
**F 21 S 1/00**

(30) Priorité: **23.10.81 FR 8119898**

(43) Date de publication de la demande:
**04.05.83 Bulletin 83/18**

(84) Etats contractants désignés:
**CH DE GB IT LI NL**

(71) Demandeur: **Tekno AG**
**Lättichstrasse 8a**
**CH-6340 Baar(CH)**

(72) Inventeur: **Baliozian, Mardick**
**33 Larchmont**
**Larchmont New York(US)**

(74) Mandataire: **Rossel, Albert, Dipl.-Ing. ETH et al,**
**Postfach**
**CH-8023 Zürich(CH)**

(54) **Panneau modulaire en matière plastique diffuseur ou réflecteur de lumière pour la photographie, le cinéma, la télévision et l'éclairage de locaux, et dispositif obtenu par l'assemblage de plusieurs de ces panneaux.**

(57) b) Le panneau (1) est réalisé en une matière semi-rigide et comporte une série de nervures embouties (2, 3, 4) orientées de façon à permettre le pliage du panneau (1) dans différents plans afin de lui donner une configuration tridimensionnelle avec de multiples facettes; des bords repliables (8, 9) sont agencés sur sa périphérie, pour permettre l'assemblage du panneau à d'autres panneaux similaires, ou la fermeture de ce panneau (1).

c) Ce panneau modulaire peut prendre des configurations tridimensionnelles très variées, et auto-stables; il est très léger et peut diffuser ou réfléchir la lumière dans tous les angles possibles.

FIG_1

EP 0 077 986 A1

Tekno AG, Baar, Suisse

Panneau modulaire en matière plastique diffuseur
ou réflecteur de lumière pour la photographie, le cinéma,
la télévision et l'éclairage de locaux, et dispositif obtenu
par l'assemblage de plusieurs de ces panneaux.

La présente invention a pour objet un panneau
modulaire en matière plastique diffuseur ou réflecteur de
lumière, pour la photographie, le cinéma, la télévision et
l'éclairage de locaux, ainsi que le dispositif obtenu par
l'assemblage de plusieurs de ces panneaux modulaires.

Il est connu que si l'on désire avoir une lumière
sans ombre ou une lumière qui donne des ombres très diffuses,
cette lumière doit venir de manière uniforme et sur un très
grand angle autour du sujet, ce qui oblige la source de
lumière à être aussi grande ou considérablement plus grande
que le sujet lui-même.

On connaît divers types de dispositifs pour réaliser une source lumineuse répondant à ces impératifs. Ainsi
selon une première réalisation connue, on utilise une multitude de petites sources de lumière contigües. Mais cet agencement est extrêmememnt onéreux, car il nécessite des connections électriques et un réflecteur pour chaque source de
lumière. De plus, la multitude de lumières ponctuelles produit des ombres multiples, et des systèmes de montage onéreux
sont nécessaires.

Il existe également de grands panneaux réflecteurs
plats, mais du fait précisément qu'ils sont plats, ces panneaux ne tiennent pas d'eux-mêmes, et nécessitent la mise
en oeuvre de supports. De plus, leurs grandes dimensions les
rendent difficiles à transporter, et l'éclairement obtenu
avec ces panneaux réflecteurs est toujours très terne, avec
une faible possibilité pour contrôler l'angle éclairé et
l'acuité de l'ombre.

On utilise également des cônes diffuseurs, qui

présent l'inconvénient de ne permettre les photographies que par le sommet du cône du fait qu'il n'y a pas d'autre ouverture, d'être onéreux, lourds et difficiles à transporter.

On utilise aussi des boîtes à lumière, dont les parois réflectrices sont faites de tissu, et présentent l'inconvénient de nécessiter une armature de support pour maintenir le tissu en place et dans la forme désirée. D'autres boîtes à lumière ont des parois rigides par exemple en alliage d'aluminium, et présentent une configuration pyramidale. Ces boîtes sont très onéreuses, ont un poids élevé et nécessitent des moyens mécaniques coûteux pour les maintenir en place.

L'invention a pour but de réaliser un panneau modulaire qui puisse avantageusement remplacer toutes les réalisations précitées en éliminant leurs inconvénients, et qui puisse être utilisé pour diffuser ou réfléchir la lumière et aussi comme boîte à lumière.

Conformément à l'invention, le panneau modulaire en matière plastique est constitué en une matière semi-rigide, comporte une série de rainures embouties et orientées de telle sorte qu'elles permettent le pliage du panneau dans différents plans afin de donner au panneau une configuration tridimensionnelle avec de multiples facettes, lui assurant une rigidité suffisante pour lui permettre d'être auto-stable sur un plan horizontal, et des moyens sont prévus sur la périphérie du panneau pour pouvoir le solidariser avec au moins un autre panneau similaire ou pour recevoir des accessoires appropriés, notamment cadres, grilles-spots, filtres.

Une matière plastique appropriée est utilisée, l'épaisseur du panneau étant suffisamment faible pour que ce panneau soit léger tout en ayant un minimum de souplesse et en même temps de rigidité lui permettant de tenir verticalement de lui-même, lorsqu'il est convenablement plié, donc sans nécessité d'un support ou d'une armature de retenue quelconque pour tenir en place.

Ce panneau étant modulaire, il peut être assemblé à un ou plusieurs autres panneaux du même type pour obtenir un assemblage à l'intérieur duquel est placé le sujet à photographier. Un tel assemblage peut prendre des formes et des dimensions variables en fonction de la géométrie et des panneaux modulaires utilisés.

Ainsi le panneau peut être de contour rectangulaire ou trapézoïdal. Dans le cas où il est trapézoïdal, on peut réaliser par assemblage de plusieurs convenablement pliés ou superposés, une sorte "d'igloo" à l'intérieur duquel est placé le sujet photographié, une ouverture étant prévue dans la paroi de cet igloo pour permettre de photographier le sujet placé à son intérieur, la (ou les) source (s) de lumière étant placée (s) à l'extérieur de l'igloo.

D'autres particularités et avantages de l'invention apparaîtront au cours de la description qui va suivre, faite en référence aux dessins annexés sur lesquels on a représenté plusieurs formes d'exécution non limitatives de l'invention.

- La figure 1 est une vue en plan d'un premier mode de réalisation du panneau diffuseur ou réflecteur de lumière selon l'invention, ce panneau étant de contour rectangulaire.

- La figure 2 est une vue en perspective d'un panneau selon la figure 1, convenablement plié pour former un volume fermé.

- La figure 3 est une vue en perspective de deux panneaux du type de celui de la figure 1, mais de dimensions différentes, pliés de façon à présenter une face libre et à tenir debout sans support, sur un plan horizontal.

- La figure 4 est une vue en perspective représentant un panneau modulaire du type de celui de la figure 1 ouvert, ainsi qu'un ensemble d'accessoires pouvant être utilisés avec ce panneau.

- Les figures 5 et 6 sont des vues en perspective de panneaux du type de celui de la figure 1, munis de différents accessoires visibles à la figure 4.

- La figure 7 est une vue en perspective d'un dispositif constitué par l'assemblage de deux panneaux du type de la figure 1 et d'un certain nombre d'accessoires attachés à ces panneaux.

- La figure 8 est une vue en perspective d'un assemblage constitué par plusieurs panneaux superposés, repliés de façon à représenter une face libre rigidifiée par un cadre pouvant recevoir divers accessoires.

- La figure 9 est une vue en plan de deux panneaux modulaires selon une seconde forme de réalisation de l'invention.

- La figure 10 est une vue en perspective simplifiée à petite échelle, de deux panneaux similaires à ceux de la figure 9, repliés.

- La figure 11 est une vue en perspective d'un assemblage de plusieurs panneaux selon la figure 9, réalisés de telle façon que cet assemblage ait une forme ressemblant à celle d'un igloo.

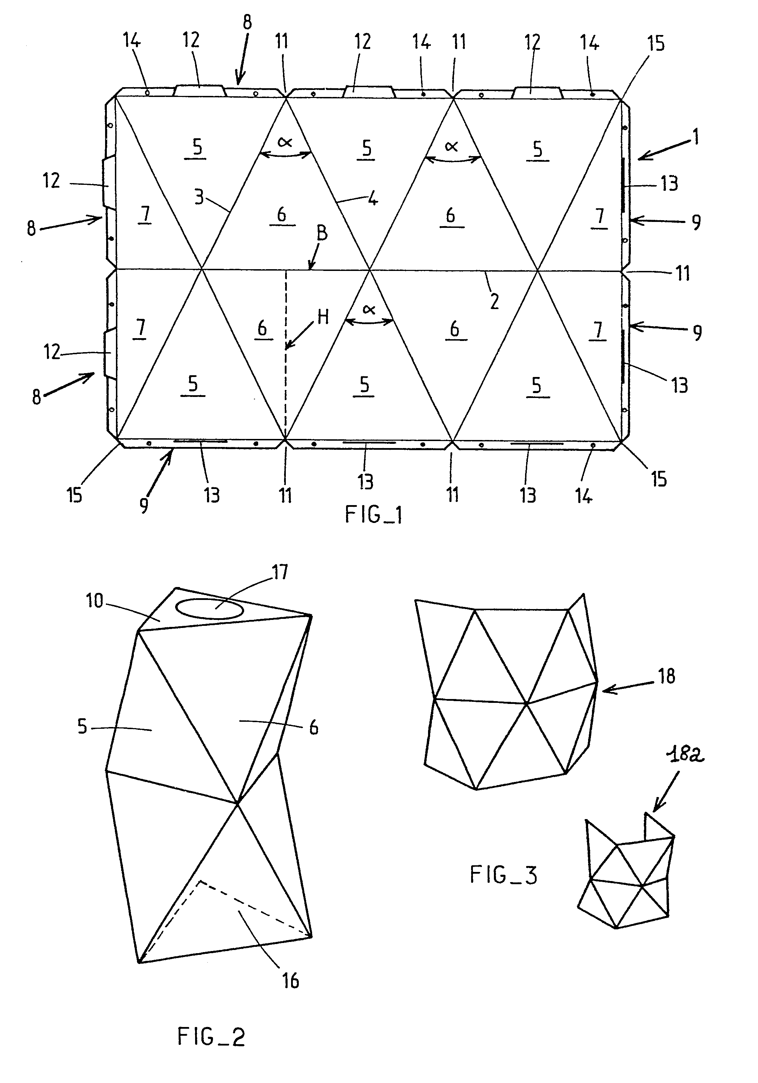

La figure 1 représente un panneau rectangulaire constitué par une feuille de matière plastique semi-rigide appropriée, par exemple en polypropylène, et d'épaisseur convenable, par exemple, 0,8 mm. Compte tenu de ses caractéristiques mécaniques, cette feuille de matière plastique peut être pliée tout en présentant une rigidité suffisante pour lui permettre de tenir debout sans support.

Le panneau rectangulaire comporte une série de rainures de 3, 4 embouties et orientées de telle sorte qu'elles permettent le pliage du panneau 1 dans différents plans afin de lui donner une configuration tridimensionnelle avec de multiples facettes. La rainure longitudinale 2 est une rainure méridienne formée selon une ligne qui joint les milieux et petits côtés du panneau 1, tandis que les rainures 3 et 4 sont agencées selon des lignes traversant la ligne méridienne 2, et qui définissent de part et d'autre de celle-ci une série de triangles contigus 5, 6 dont les bases sont alternativement situées sur la ligne médiane 2 et sur les grands côtés du panneau 1, et inversement pour leurs sommets. Les triangles 5 et 6 sont identiques et disposés de façon symétrique de part et d'autre de la ligne médiane 2. Des triangles rectangles 7 sont délimités par les petits côtés du panneau 1 et les triangles adjacents 5, lesquels sont isocèles, ainsi que les triangles 6. L'angle au sommet de chaque triangle 5, 6 peut varier en fonction de l'effet souhaité et de la taille du panneau etc...

Le long du pourtour du panneau 1 sont ménagés des bords repliables 8, 9, grâce à des rainures embouties formées à cet effet à l'intersection des bords 8, 9 et des triangles contigus 5, 6, 7. Des bords repliables identiques sont formés le long d'un même côté, des bords complémentaires étant formés sur le côté opposé pour pouvoir coopérer avec les bords du premier côté, deux sections consécutives 8 ou 9 étant séparées par une encoche 11 en forme de V. Dans chaque section est agencée une languette 12 apte à venir s'introduire dans une fente correspondante 13 ménagée dans la section 9 du bord repliable du côté opposé. Chaque section 8, 9 est en outre percée de trous 14 permettant l'accrochage d'un accessoire approprié.

Des découpes 15 sont également formées aux quatre angles du panneau 1, afin de permettre, comme les encoches 11, le pliage de celui-ci le long des diverses rainures 2, 3, 4.

Pour mettre le panneau 1 dans la forme tridimensionnelle à multi facettes, on le plie tout d'abord le long de la ligne méridienne 2, puis en sens inverse successivement le long des différentes rainures 3, 4 y compris les rainures périphériques séparant les bords repliables 8, 9 des triangles adjacents. On peut ainsi donner par pliage diverses configurations au panneau 1 : sur la figure 2 le panneau est refermé de façon à faire pénétrer les languettes 12 d'un des petits côtés, dans les fentes 13 du petit côté opposé, afin de maintenir le panneau sous cette forme, dans laquelle il reste auto-stable sur un plan horizontal, par sa base triangulaire. Cette dernière, ainsi que la face supérieure triangulaire du panneau peut être fermée par une plaque triangulaire 16, 10 pouvant être solidarisée avec les côtés correspondants du panneau par des moyens connus en soi et non représentés pour simplifier le dessin, utilisant, par exemple, les trous 13 et/ou 14. La plaque 10 supérieure est percée d'une ouverture 17 permettant l'éclairage de l'intérieur du panneau par une source de lumière non représentée. On obtient ainsi un panneau fermé présentant une série de facettes triangulaires 5, 6, susceptible de servir de luminaire omnidirectionnel.

A la figure 3 on voit deux panneaux 18, 18a de dimensions différentes, mais de structure similaire à celle du panneau 1, repliés de façon à pouvoir tenir debout sans support annexe, en présentant une face ouverte.

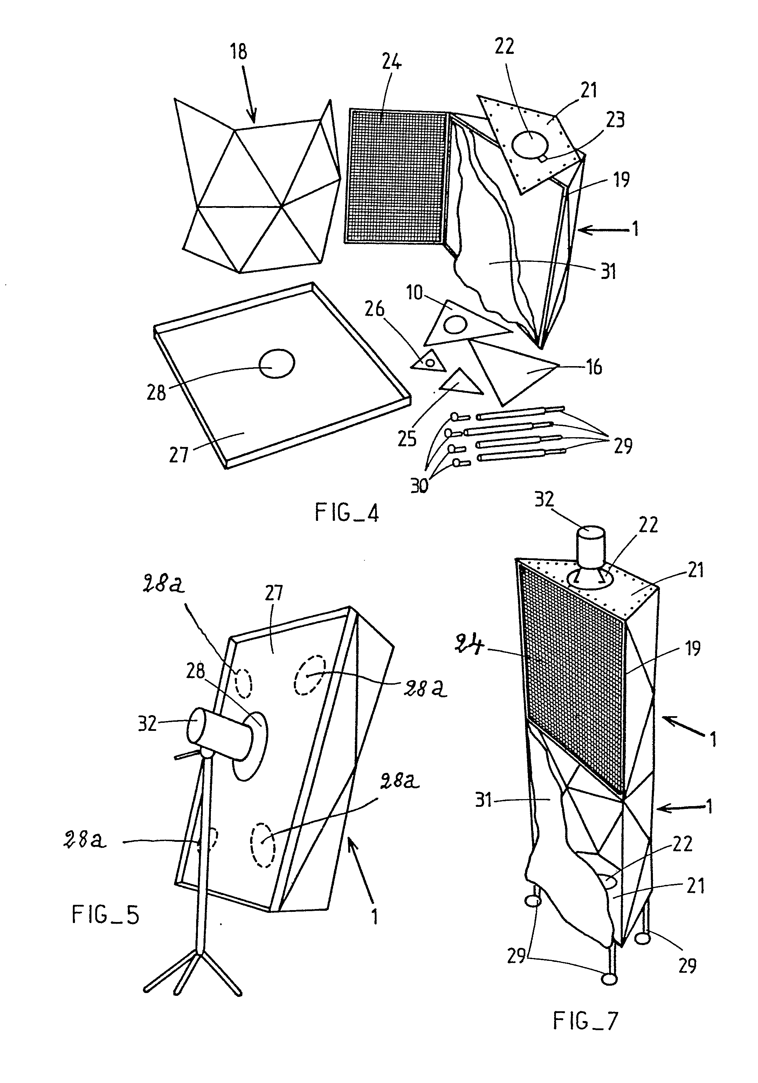

La figure 4 montre un panneau 18 ainsi qu'un certain nombre d'accessoires pouvant être utilisés avec celui-ci : un cadre rectangulaire démontable 19, une plaque 21 amovible, destinée à fermer le dessus du panneau replié et pouvant être percée d'une ouverture 22 pour une source de lumière, cette plaque étant trapézoïdale dans cet exemple, mais pouvant être triangulaire, carrée ou pentagonale en fonction de la configuration choisie pour le panneau et de son utilisation.

La source de lumière non représentée peut être fixée sur la plaque 21 au moyen d'un organe de retenue 23 connu en soi. Parmi les accessoires visibles à la figure 4, on trouve encore une grille-spot 24, utilisée pour limiter l'angle et la zone éclairée, qui peut être montée dans le cadre 19, comme représenté dans la variante de réalisation de la figure 7. Parmi les accessoires figurent encore des plaques triangulaires 16, 10, 25, 26, les deux dernières étant plus petites que les plaques 16, 10 et la plaque 26 étant percée d'un orifice pour la source de lumière. Une plaque rectangulaire 27, opaque et réfléchissante, percée d'un trou central 28, ou de plusieurs trous 28a, peut être assujettie aux petits côtés verticaux d'un panneau tel que 1 ou 18 (figure 5) par des moyens connus en soi et non représentés tels que boutons-pression, plaquettes "Velcro" etc. Ces mêmes organes de fixation peuvent d'ailleurs être utilisés également pour le montage des autres accessoires mentionnés ci-dessus. On voit également sur la figure 4 une série de pieds amovibles 29, de préférence télescopiques, auxquels peuvent être fixés des roulettes 30, ces pieds 29 pouvant être fixés à la base du panneau afin de la surélever.

On voit à la figure 5 un panneau 1 avec des bords pliés recevant une plaque 27 en face de l'ouverture 28 de laquelle est placée une source de lumière 32. La plaque 27 peut être réalisée en plusieurs parties et est pliable.

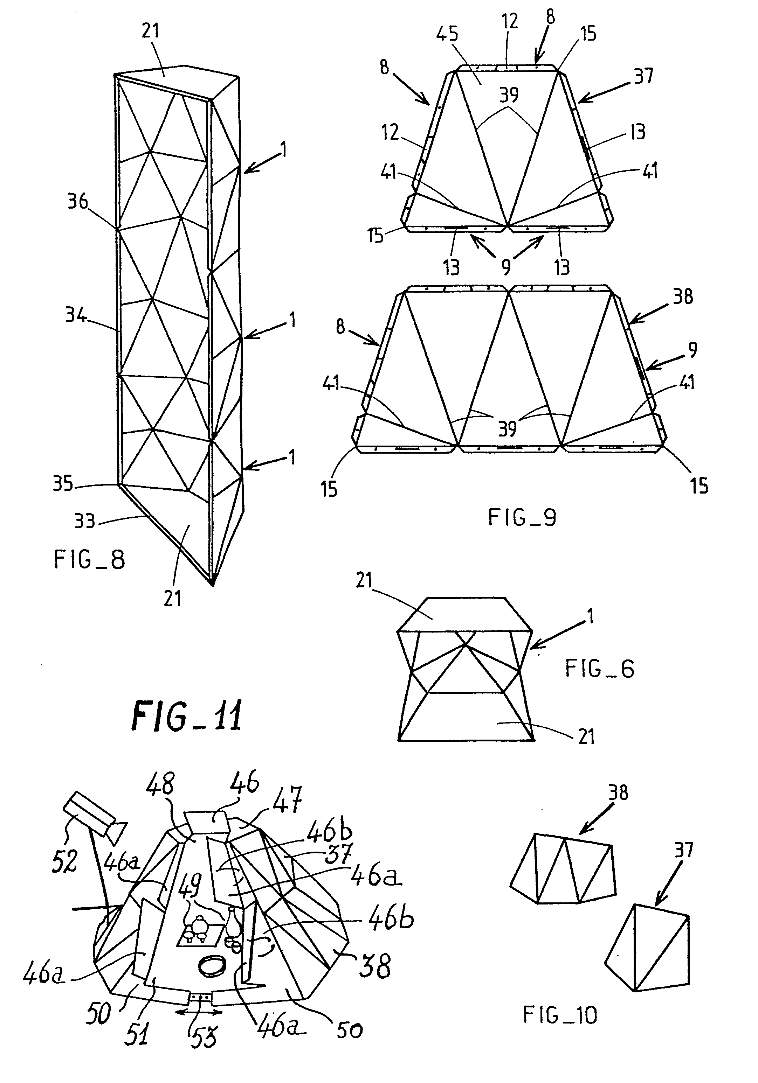

La figure 6 représente un panneau 1 plié de façon à présenter une face ouverte, et dont la base ainsi que le sommet sont pourvus de plaques trapézoïdales 21.

Dans la réalisation de la figure 7, deux panneaux 1 sont superposés, le panneau du bas étant fermé par une plaque 21 percée d'un trou 22, et étant muni de quatre pieds de support 29 permettant de surélever l'ensemble pour pouvoir disposer une source de lumière non représentée sous l'ouverture 22. Le panneau inférieur 1 est également muni d'un cadre 19, pourvu lui-même d'un diffuseur souple 31 (également représenté figure 4). Une source de lumière 32 est disposée au-dessus de la plaque supérieure 21.

Le dispositif de la figure 8 est formé par l'assemblage de trois panneaux 1 superposés, équipés sur le pourtour de leur face antérieure ouverte d'éléments rigides 19, 33, 34 (tiges ou cornières convenablement percées), maintenues ensemble par des organes d'assemblage 35, 36. Des plaques 21 peuvent être ajoutées sur les faces supérieures et à la base de l'assemblage, afin de donner à celui-ci une meilleure rigidité et une forme convenable. Ce dispositif est auto-stable et peut être utilisé soit pour diffuser soit pour réfléchir de la lumière.

Les plaques 21 ainsi que la plaque rectangulaire 27, peuvent être découpées dans la même feuille, ou même dans la même feuille que le panneau 1.

La figure 9 illustre deux autres formes de réalisation de l'invention, dans lesquelles le panneau est trapézoïdal. Chacun des panneaux trapézoïdaux 37, 38 comporte des rainures 39, 41 embouties, les rainures 41 étant perpendiculaires aux côtés inclinés du trapèze et passant par les sommets des triangles formés par les rainures.

Sur leur pourtour, les panneaux 37, 38 sont munis de bords repliables (8, 9) analogues à ceux déjà décrits pour le panneau 1.

Les rainures 41 et les bases des trapèzes 37, 38 délimitent des triangles rectangles repliables, pouvant servir d'appuis au panneau plié et disposé debout sur un plan horizontal.

Les rainures 39 et 41 délimitent des triangles tous identiques afin de permettre l'accrochage d'un panneau 37 sur l'autre panneau 38 par les bords complémentaires (8, 9) de leurs bases ou bien par leurs côtés inclinés.

La longueur de la grande base du panneau 37 est égale à celle de la petite base, supérieure, du panneau 38, tandis que le rapport des longueurs de la grande base du panneau 38 et de la petite base du panneau 37 est de 3 à 1.

Il est ainsi possible de former un assemblage fermé (figure 11) en superposant plusieurs panneaux 37 attachés les uns aux autres par leurs côtés inclinés, et plusieurs panneaux 38, par exemple cinq, ainsi qu'un panneau frontal 50, également attachés entre eux, et solidarisés par leurs côtés supérieurs horizontaux à la base de l'assemblage des cinq panneaux 37. On réalise de la sorte une construction dont le sommet a un contour hexagonal, susceptible d'être obturé par une plaque 47 percée d'une ouverture 48 munie d'une porte 46 pour permettre par celle-ci l'introduction d'un appareil de prise de vue non représenté, devant photographier un sujet 49 disposé à l'intérieur de la sorte "d'igloo" constitué par l'assemblage 37, 38.

L'un des panneaux 37 et 38 peut être percé aussi d'une ouverture afin de pouvoir photographier de côté le sujet 49 placé dans l'intérieur de l'igloo, mais il est plus pratique d'avoir un panneau spécial 50 comportant une ouverture 51 et plusieurs portes 46a, chacune munie d'un moyen de blocage tel que des lacets 46b. Ces portes 46, 46a permettront la prise de vue sur des angles différents du haut jusqu'en bas du sujet 49 placé à l'intérieur de l'igloo et éclairé par la source de lumière 52 placée à l'extérieur. Un système d'attache réglable 53 permet de varier l'ouverture 51.

La largeur de cet "igloo" peut naturellement varier en fonction du nombre de panneaux utilisés et de leurs dimensions. Si l'on utilise un nombre différent de panneaux, par exemple des séries de 3, 4 ou 5, on obtiendra respectivement des sommets triangulaire, carré et pentagonal.

La figure 10 montre un panneau 37 replié de part et d'autre du triangle central 45 de façon à pouvoir prendre appui par des triangles rectangles contigus à sa grande base, ainsi qu'un panneau trapézoïdal 38 déployé de manière à pouvoir tenir en place de lui-même, sans support par sa propre rigidité de la même façon que le panneau 37.

Les avantages du panneau modulaire et de l'assemblage selon l'invention sont les suivants.

Ce panneau présente une fois déployé une multitude de facettes triangulaires, et grâce à cette construction il présente une grande résistance à une force qui lui est appliquée. Il peut être plié pour prendre des formes extrêmement variées autour de l'objet à photographier. Grâce à sa construction modulaire, ses dimensions et ses configurations peuvent être modifiées à volonté en assemblant plusieurs panneaux ensemble.

Ce panneau est incassable et peut être plié un nombre illimité de fois sans casser. Il peut être plié pour le transport en occupant un minimum de place, de sorte que les assemblages de ces panneaux ou les boîtes à lumière réalisés peuvent être aisément scindées en parties aplaties qui peuvent être emballées sans difficultés  et transportées. Le poids de ces panneaux est très faible par rapport à celui des diffuseurs conventionnels réalisés en plastique rigide et d'une épaisseur de 2 mm. De plus ils ne nécessitent aucun support onéreux. La forme tridimensionnelle leur permet de capturer la lumière venant de tous les angles possibles, alors qu'une surface plane capture de moins en moins de lumière au fur et à mesure que l'angle d'incidence se rapproche de son plan. Pour la même raison, sa configuration tridimensionnelle lui permet d'éclairer un plus grand angle qu'une surface plane de même taille.

Les bords repliés 8, 9 ainsi que les moyens prévus sur ceux-ci (12, 11, 14) permettent d'attacher sur les côtés du panneau un très large choix d'accessoires utiles. Il est également possible de monter des organes de support de sources de lumière par exemple au moyen de clips élastiques fixés sur le pourtour d'un cadre tel que 19.

L'invention n'est pas limitée aux formes de réalisation décrites et peut comporter de nombreuses variantes d'exécution en plus des formes d'exécution décrites précédemment et notamment celles des Figures 1 et 9, dans chacune desquelles le panneau présente un contour polygonal (rectangle ou trapèze) et est subdivisé en une ou plusieurs rangées de triangles et ce, par des rainures croisées s'étendant entre deux côtés opposées de ce panneau, l'alternance de ces triangles étant telle que leurs bases sont disposées alternativement le long de l'un des côtés de départ des rainures entrecroisées et le long du côté opposé, ou d'une ligne intermédiaire parallèle à ce dernier côté.

REVENDICATIONS


1 - Panneau modulaire en matière plastique diffuseur et/ou réflecteur de lumière pour la photographie, le cinéma et la télévision, caractérisé en ce qu'il est constitué en une matière semi-rigide, en ce qu'il comporte une série de rainures embouties (2, 3, 4, 39, 41) et orientées de telle sorte qu'elles permettent le pliage du panneau (1) dans différents plans afin de donner au panneau une configuration tridimensionnelle avec de multiples facettes (5, 6, 7) lui assurant une rigidité suffisante pour lui permettre d'être autostable sur le plan horizontal, et des moyens sont prévus sur la périphérie du panneau (1) pour pouvoir le solidariser avec au moins un autre panneau similaire (1) ou pour recevoir des accessoires appropriés, notamment cadres (19, 33, 34), grilles-spots (18), filtres, plaques (10, 16, 21, 27).

2 - Panneau selon la revendication 1, caractérisé en ce qu'il présente un contour polygonal les rainures embouties dans ce panneau s'étendent selon des lignes croisées reliant deux côtés opposés de celui-ci, et le subdivisant en au moins une rangée de triangles alternées dont les bases sont disposées alternativement le long de l'un des deux côtés de départ des rainures croisées et le long du côté opposé à celui-ci.

3 - Panneau selon la revendication 1, caractérisé en ce qu'il est rectangulaire (1) et des rainures (2, 3, 4) sont embouties, d'une part suivant une ligne joignant les milieux de deux côtés opposés et d'autre part suivant des lignes définissant de part et d'autre de cette ligne médiane, une série de triangles contigus (5, 6) dont les bases sont alternativement sur ladite ligne médiane (2) et sur les grands côtés du panneau (1) et inversement pour leurs sommets, les triangles (7) bordant les petits côtés étant rectangles tandis que les triangles intercalaires (5, 6) sont isocèles, de sorte que le panneau (1) peut être plié dans les trois dimensions en présentant une série de facettes dans des plans différents, constitués par lesdits triangles (5, 6, 7).

4 - Panneau selon la revendication 1, caractérisé en ce qu'il est trapézoïdal (37, 38) et que les rainures (39, 41) sont orientées de façon à délimiter, d'une part le long de la grande base des triangles repliables susceptibles de servir d'appuis à l'ensemble du panneau (27, 38) sur une surface horizontale, et d'autre part entre ces triangles, d'autres triangles constituant autant de facettes lorsque le panneau est plié et dont le nombre est fonction des longueurs des bases du trapèze.

5 - Panneau selon l'une des revendications 2, 3 et 4, caractérisé en ce que les moyens prévus sur sa périphérie pour le solidariser avec d'autres panneaux similaires après pliage ou pour recevoir des accessoires comprennent des bords pliables (8, 9), dans lesquels sont formées des fentes délimitant entre elles des languettes (12), des encoches (11) aux jonctions entre deux triangles contigus, et des fentes (13) dimensionnées pour pouvoir recevoir et retenir des languettes (12) correspondantes du panneau (1, 37, 38) après pliage de ce dernier, afin de le maintenir dans la forme voulue, ou des languettes d'autres panneaux similaires afin d'attacher ceux-ci au panneau (1, 37, 38), des trous pouvant également être percés à intervalles dans les bords repliables entre les languettes pour permettre l'accrochage d'accessoires.

6 - Dispositif obtenu par assemblage d'au moins deux panneaux modulaires rectangulaires selon l'une des revendications 1, 2, 3 et 5, caractérisé en ce que, les panneaux étant pliés en réservant entre leurs côtés verticaux une face ouverte, des cadres rectangulaires (19) sont montés sur les côtés de cette face et supportent des accessoires tels que grilles-spots (24) et diffuseurs souples (31), des plaques (21) percées pour permettre le passage d'une source de lumière (32) pouvant être fixées sur les faces supérieure et inférieure du panneau, de même que des pieds de support (29) répartis sous la face inférieure.

7 - Panneau selon l'une des revendications 1, 2, 3 et 5, plié de façon à délimiter une face libre caractérisé en ce qu'il est pourvu d'un cadre rectangulaire (27) attaché aux côtés de cette face libre et percé d'au moins une ouverture (28) destinée à permettre l'éclairage de l'intérieur du panneau par une source de lumière.

8 - Dispositif obtenu par assemblage de plusieurs panneaux selon l'une des revendications 4 et 5, caractérisé en ce que ces panneaux trapézoïdaux (37, 38) sont solidarisés de façon à constituer un volume fermé sauf à sa base et à son sommet, le panneau frontal (50) étant percé d'une ouverture (51) ainsi qu'éventuellement de portes (46a) pour permettre une prise de vue latérale et la face supérieure pouvant être obturée par un couvercle (47) dans lequel est éventuellement ménagée une ouverture (48) munie éventuellement d'une porte (46).

9 - Panneau selon l'une des revendications 1, 2, 3, 5 et 7, caractérisé en ce que, ce panneau étant plié de façon à tenir debout sur un plan horizontal en réservant entre ses côtés une face ouverte, il est équipé d'un cadre rectangulaire (19, 33, 34) monté sur les côtés de cette face et supportant des accessoires tels que grilles-spots (24) et diffuseurs souples (31), des plaques (21) percées pour permettre le passage d'une source de lumière (32) pouvant être fixées sur les faces supérieure et inférieure du panneau (1) de même que des pieds de support (29) répartis sur la face inférieure.

10 - Panneau selon la revendication 9, caractérisé en ce que le cadre rectangulaire (27) ainsi que les plaques (21), percées ou non, fixées aux faces supérieure et inférieure du panneau (1) sont découpées dans la même feuille, ou de plus dans la même feuille que le panneau (1) proprement dit.

FIG_1

FIG_2

FIG_3

FIG_4

FIG_5

FIG_7

FIG_8

FIG_9

FIG_6

FIG_11

FIG_10

**0077986**
Numéro de la demande

Office européen
des brevets

**RAPPORT DE RECHERCHE EUROPEENNE**

EP 82 10 9541

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| | --- | | G 03 B 15/02 |
| P,X | EP-A-0 048 185 (BALCAR) *Pages 7-18; figures 1-17* | 1-3,6, 9 | F 21 S 1/00 |
| A | --- FR-A-2 468 144 (BALIOZIAN M) *Page 6, lignes 19-33; pages 7-15; figures 1-11* | 1-3,6, 9 | |
| A | --- FR-A- 671 591 (C.GERVAIS) *Page 2; page 3, colonne 1; figures 1-10* | 1,2 | |
| A | --- FR-E- 38 125 (C.GERVAIS) *Page 1, lignes 36-54; page 2, lignes 1-69; figures 1-4* | 5 | |
| | ----- | | |

DOMAINES TECHNIQUES
RECHERCHES (Int. Cl. 3)

G 03 B 15/02
G 03 B 15/06
G 09 F 13/14
F 21 S 1/00
F 21 V 1/16
F 21 V 1/18
F 21 V 1/00
F 21 V 7/05
F 21 V 7/18

Le présent rapport de recherche a été établi pour toutes les revendications

| Lieu de la recherche | Date d'achèvement de la recherche | Examinateur |
|---|---|---|
| LA HAYE | 13-01-1983 | BOEYKENS J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82